# EUROPEAN PATENT SPECIFICATION

(11) **EP 2 181 439 B1**
(45) Date of publication and mention of the grant of the patent: **18.03.2020**
(21) Application number: 08793899.9
(22) Date of filing: 07.08.2008
(51) Int. Cl.: G01B 17/02, E04D 13/10, E04D 13/08, E04D 13/076, E04D 13/04

(54) **INSTALLATION FOR DETECTION AND MEASURING OF STRATIFICATION AROUND A DRAIN**
ANLAGE ZUR DETEKTION UND MESSUNG VON STRATIFIKATION UM EINEN AUSLASS
INSTALLATION DE DÉTECTION ET DE MESURE DE LA STRATIFICATION AUTOUR D'UNE ÉVACUATION

(30) Priority: 08.08.2007 NO 20074107
(43) Date of publication of application: 05.05.2010
(73) Proprietor: Johnsen, Asle Ingmar, 3117 Tonsberg (NO)
(72) Inventor: Johnsen, Asle Ingmar, 3117 Tonsberg (NO)
(74) Representative: Helliesen, Even O.
(86) International application number: PCT/NO2008/000287
(87) International publication number: WO 2009/020399

(56) References cited:
- EP-A1- 0 393 960
- WO-A1-96/22567
- WO-A1-96/22567
- DE-A1- 10 129 992
- US-A- 5 095 754
- US-A- 5 095 754
- US-A- 6 051 812
- US-A1- 2003 169 186

## Description

This application claims priority to Norwegian Patent Application 2007 4107, filed 8 August 2007.

The invention concerns and installation for detection and measuring of stratification around drains/outlets for drainage of liquid, in particular environmentally induced stratification such as water and/or ice around drains/outlets on stationary building roofs. The installation comprises one or more sensors and one or more control and measuring systems. An installation for detection of stratification on a building roof is disclosed in WO 96/22567 A1. An installation in which thermostats are used to detect snow, ice and water formations, in particular on roofs, in roof rainwater outlets and gutters, and also around manholes in roads or similar, is disclosed in NO 302 256. This known installation necessitates the making of channels or openings through the base surrounding the drain or gutter/roof downpipes, leading to risk of future leakage. Since the sensors are mounted on the same side as the layers of ice, snow and water there is a risk of damage due to environmental related exposure or undesired intrusion of foreign bodies such as human beings and animals. The sensors are neither able to directly identify the type of stratification existing around the drain/outlet. In addition, protrusions of components may give an aesthetic degrade of the surroundings.

Based on the state of the art, the object of the present invention is to provide an installation which in an efficient and easy manner is capable of detecting stratification in the surroundings of outlets/drains, in particular around outlets on building roofs, and where the sensors are arranged in such a way as to prevent direct access from the side on which any stratifications occurs.

A more specific object with the present invention is to provide an installation capable of detecting stratification due to environmental related exposure, where such exposure may limit the passage of the liquids through the drain/outlet and thereby prevent pressurisation of large surfaces. Stratifications due to environmental related exposure may comprise accumulation/development of circular shaped ice formation (ice ring) around drains/outlets, and/or obstruction of outlets/drains on building roofs due to the present of leaves, dirt, nest and the like.

Said objects are achieved by an installation for detection and measurement of stratification around drains/outlets on building roofs, as stated in the introduction, having the characteristic features as stated in claim 1. A method for detection and measurement of stratification around outlets/drains on building roofs has the characteristic features as stated in claim 8. Preferred embodiments of the invention are stated in the dependent claims.

In what follows, drains/outlets are defined as outlets/drains on stationary building roofs.

Detection, identification and thickness of said layers located above each of the piezoelectric transducers are achieved by generation and transmission of acoustic waves, followed by measurements of tranducer signals caused by reflected, acoustic waves in the interfaces and surfaces of the layers. The one or more dedicated control and measurement systems calculate reflection coefficients and time delays based on the received tranducer signals. A preferred embodiment is to encapsulate each of the piezoelectric transducers in protecting cases.

Depending on the positions of the transducers the reflected acoustic waves may indicate the source and the stage of for example stratification caused by environmental factors such as accumulation of ice, water and snow. If proper calibrations of the contact medium and possible candidates of stratification are carried out, for instance by controlled measurements of known types of layers and layer thicknesses, it is also feasible to identify various stratifications by measurements of the corresponding reflection and transmission coefficients, including an estimate of the thicknesses of said layers. For such measurements, i.e. identification and measurement of thickness, it is advantageous to select a contact medium with acoustic impedance close to the acoustic impedances of the layers to be measured. Such a choice would result in larger variations in the measured reflection coefficients.

It is important to obtain close acoustic contact when mounting the transducers onto the contact medium. This can be accomplished by for example applying a suitable sealing compound in the interface between the transducer and the contact medium. If each transducers are encapsulated in a protection case, choice of sealing compounds and choice of mounting arrangement may be carried out in a relatively unrestricted manner. When applying protection cases it is desirable to fasten the cases to the contact medium in such a way that they may be demounted in a relatively simple way to facilitate future inspections and maintenances of the transducers. Furthermore, the design of the contact medium is adapted such that the acoustic waves are diverted in an appropriate way.

A suitable material for the contact medium may for instance be made in such a way that the acoustic waves that are transmitted from each of the piezoelectric transducers are divided into at least two channels, and where the resulting separated acoustic waves are guided by the contact material to different positions underneath the monitored layers due to devices that change the directions of the acoustic waves. Provided that a sufficiently large length difference exists between the two divided channels of the contact medium corresponding to one of the transducers, the reflected acoustic waves in the monitored interfaces and surfaces will reach the transducer with time delays adequately large to render separate registrations and analyses feasible. Such solution has several advantages:
- the necessary number of transducers may be reduced
- the transducers may be mounted in central positions facilitating maintenances and replacements
- the need for multiplexes may be reduced or removed
It is desirable that said arrangement is combined with at least one weight sensor located around the outlet. Such weight systems may be employed for measurements of for instance the amount of snow and/or employed for the following applications:
- simple and effective detection of foreign matters present around the outlet (human beings, animals, toys, etc.)
- better identifications of stratification by combining measurement results from both the transducers and the weight sensors. This factor implies that the different layers to be distinguished, such as ice and water, have material density or densities that are sufficiently dissimilar.
The two applications necessitate different arrangements of the weight systems. For the first mentioned application, i.e. detection of foreign matters, it is expedient to arrange the weight systems further away from the outlet relative to the locations of the transducers. For the latter application the weight systems should preferably be mounted in close proximity to the transducers. To provide further information of any stratification it may also be expedient to mount at least one weight system in direct proximity to the outlet. The type of weight systems may be any weight system capable of measuring weight variations on a base/support, either directly by pressure or indirectly by detection of movements in the base exceeding a set threshold value. However, it is desirable that each of the weight systems may detect force variations over a certain area, alternatively that weight system modules are arranged on the base comprising several weight systems, and in addition that these systems do not permit direct access from the stratification side. The latter requirement favours a weight system based on detection of movements within the base.

A certain fraction of the total number of transducers and weight systems constituting the installation may be employed to generate reference signals.This can be done by mounting at least one transducer and / or at least one weight system in an area where stratification normally does not take place, for example in proximity to a cornice in case of stratification on roofs. Alternatively, external calibration results may be employed as reference signals, i.e. from controlled tests of transducers and weight systems which are carried out without stratification, but having a remaining surrounding identical to the actual conditions by the outlet. Such reference signals may subsequently be compared with the measured signals from the transducers and the weight systems arranged underneath any stratification of for instance water and/or ice, and thereby to facilitate the following interpretation of the measured results.

The centre frequency of the transducer signals is preferably adapted such that the transmitted and received acoustic waves are insensitive to other stratifications than those of interest. The result of an increase in the transducer frequency is a reduced penetration, a reduced acoustic wave energy, an increased sensitivity to non-homogeneities in transport media, and normally lower signal-to-noise ratios. On the other hand, the frequency should be sufficiently high to reliably measure the relevant layer thicknesses. In the present invention layer thicknesses in the range 1 centimetre or more are measured, giving a minimum frequency that lays well below commercially available low frequency transducers. For instance, piezoelectric ultrasound transducers with frequencies in the range 20-30 kHz may be applied, i.e. in a frequency range just above the perceivable frequency range for the human ear.

As an extra precaution it is preferably, but not required, to provide temperature sensing to enable disclosure of any malfunction within the installation. When apparatus such as automatic melting of snow and ice using heating cables (NO 302 256) are employed, one or more of said temperature sensing devices may prevent actuation of heating cables where said actuation is based on incorrect measurement results from the transducers and/or weight systems. With said combination at least one warning signal is transmitted to a control unit once the temperature sensing devices register temperatures above a set threshold. If a dedicated temperature sensing device is employed, its position may be selected relatively freely provided the device is sufficiently protected against stratification and/or ingress of foreign matters.

In the case of more than one monitored outlet, the invention may be arranged in one of the following 4 combinations:
1. Each of the requested outlets to be monitored are connected to a monitoring system comprising one control and measurement system, at least one transducer and/or at least one weight system.
2. The requested outlets to be monitored are divided into modules of at least 2 outlets, where each module is connected to a monitoring system comprising one control and measurement system, at least one transducer and/or at least one weight system.
3. The requested outlets to be monitored comprise at least one transducer and/or at least one weight system, where all of said outlets are connected to a central control and measurement system.
4. Combinations of configurations 1 and 2.
Outlets placed in environments having identical or close to identical conditions may be assumed to cause stratification around or above a number of outlets less than the total number of outlets that mirrors the actual stratification around all of the outlets. Actuation of any operations such as melting of snow and ice may hence be based on measurement results from a number of monitored outlets less than the total number of the requested outlets to be monitored.

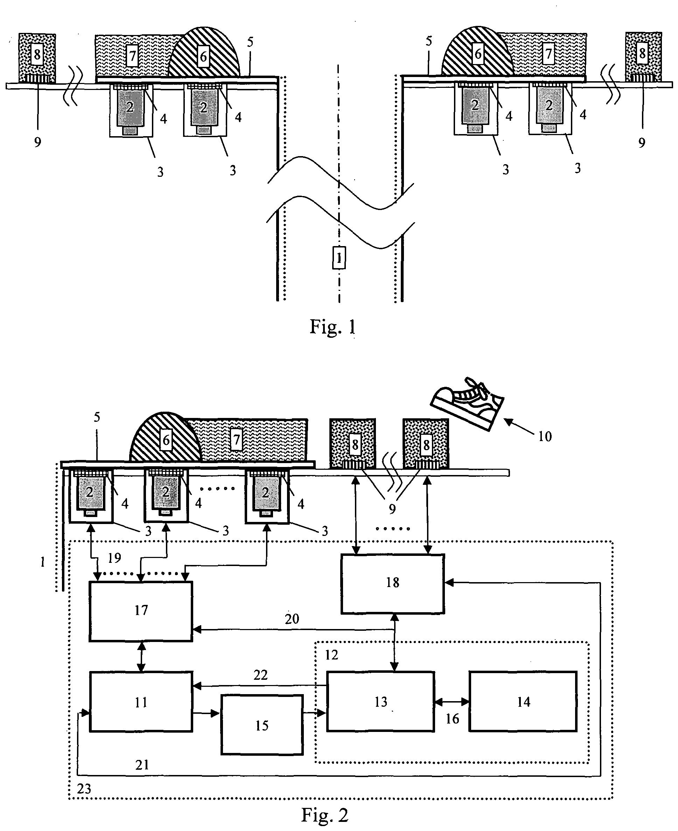

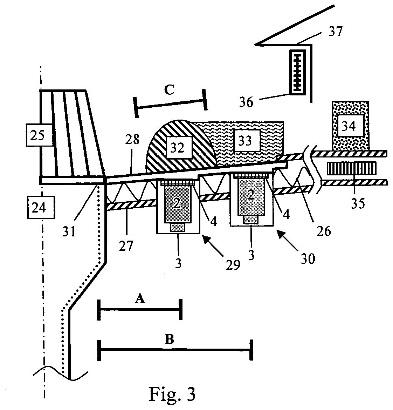

The invention will be further described below in connection with exemplary embodiments with reference to the drawings, where figure 1 shows a schematic drawing of an outlet/drain where exemplifying locations of transducers and weight systems are illustrated, together with possible stratifications. The broken line in the centre of the outlet indicates a cylindrical form of the outlet. Figure 2 shows a section of the outlet in figure 1, illustrating in form of a block diagram the principle for connecting a control and measurement system to the mounted transducers and weight systems. Figure 3 shows an example of stratification around a roof rainwater outlet where detection of stratification by employing piezoelectric transducers and weight systems according to the invention is integrated into a system for melting of snow and/or ice, and that in addition employs a control unit for engaging and disengaging the heating apparatus.

The drawing in figure 1 comprises an outlet 1 in the shape of a tube, where exemplifying locations of transducers 2 surrounded by protection cases 3 are indicated. Both transducers 2 and protection cases 3 are mounted underneath at least one contact medium 5, where said contact medium 5 ideally has an acoustic impedance near the acoustic impedance of the measured layer 6,7. Sealing compounds 4 are indicated between the transducers 2 and the contact medium 5 to assure good acoustic contact between the two latter components 2,5. The hatched areas with left tilted lines 6, wave formed lines 7 and dots 8 symbolise three different stratifications, respectively, for example ice, water and snow. The choice of the number of transducers 2 and their positions depends on the desired information. In this embodiment layer 6 may symbolize an ice ring, which typically is formed around the outlet 1 on house roofs (NO 175 912). In the embodiment shown in figure 1 the transducers 2 may for example monitor the growth of said ice ring 6. In the surroundings of the outlet in figure 1 suggested positions of weight systems 9 are given that enable the detection of weight changes due to for example accumulation of snow or undesired intrusion of human beings and/or animals.

Figure 2 shows a similar embodiment as in figure 1, where transducers 2 and weight sensors 9 are located in proximity to the outlet 1, and where a schematic diagram for automatic communication with the set of weight systems and the set of transducers are indicated 23. In this embodiment the apparatus comprises four main units: computer 12, transmitter/receiver 11, multiplexer(s) 17,18 and a set of transducers and weight systems 2,9. In case only one transducer 2 and one weight system 9 are employed the multiplexer(s) component(s) 17,19 may be omitted.

The purpose of the computer 12 is to initiate a data acquisition cycle by setting the multiplexer(s) 17,18 to a fixed channel via one or more communication buses 20. A trigger signal 22 is then transmitted to a transmitter/receiver unit 11 via a I/O unit 13, with the subsequent generation of one or more signals by the transmitter/receiver unit 11. Said one or more signals are further transmitted through one or more wires 19 to the at least one transducer 2 via the multiplexer 17. The reflected signal from the at least one transducer 2 is transmitted back to the transmitter/receiver unit 11 via the multiplexer 17, and subsequently transmitted to the I/O unit 13 for data acquisition and digitalisation via, in this particular embodiment, an amplifier 15. Further data processing is carried out using a processor 14 with a suitable software stored in the memory, where said processor 14 communicates 16 with said I/O unit 13. A condition for this embodiment is the presence of both analog and digital output in the I/O unit 13, having the possibility of performing A/D and D/A conversion. Data acquisition from the one or more weight systems 9 may, as an example, be accomplished in the same way as the data acquisition from the at least one transducer 2, with the exception that the generation of one or more signals from the transmitter/receiver unit 11 act as the synchronization signal(s) 21 of the selected weight system(s) 9 to assure simultaneous reading(s) of data from transducer(s) and weight system(s), and that said transmitter/receiver unit 11 only forward the retransmitted result from the weight system(s) to the I/O unit 13, alternatively through the amplifier 15. As in figure 1 the example illustrates a possible growth of an ice ring 6 and water 7, and in addition snow formation 8 more distant from the outlet. Possible intrusion of foreign matters such as human beings, symbolized by a shoe 10 in figure 2, is registered by the weight system 9.

In a typical embodiment more than one transducer and more than one weight sensor are expediently positioned with the purpose of acquiring sufficient information concerning stratifications and movements around an outlet. The transducers transmit acoustic waves, and the acoustic waves are reflected on the interfaces of the different layers. The transducer generated signals originating from the reflection waves are further processed using a control system. By performing proper signal processing and calibration, information such as identification and layer thickness may be obtained. The acquisition and processing of data acquired from the weight systems and from the transducers should preferably be synchronized by the control system. The weight systems should preferably be mounted both inside and outside the transducer area in such a manner that supplement information concerning the measured stratification, as well as detection of undesired intrusion of foreign matters such as animals and/or humans beings, may be achieved. Furthermore, it is preferable that the invention is integrated into an apparatus for automatic melting of snow and ice.

As a specific embodiment of the invention attention is given to the detection of stratification above and around roof rainwater outlets employing an arrangement of piezoelectric transducers and weight systems, and where the arrangement is combined with an apparatus for melting snow and ice such as disclosed in NO 302 256. Figure 3 shows a schematic drawing of a roof section where an arrangement including a heating apparatus 26 is mounted in connection with a roof rainwater outlet having an internal outlet 24 and a gully cap 25. The heating apparatus 26 as illustrated in figure 3 is mounted between two layers of roofing 27 and/or between a roofing 27 and gully collar 28, and/or under the gully collar 28. In this embodiment the gully collar 28 is acting as said contact medium 5. To detect the formation of ice ring 32 and subsequent accumulation of water 33, two transducer assemblies 29,30 comprising piezoelectric transducers 2, protection cases 3 and sealing compound(s) 4 are mounted on the bottom side of the roof rainwater outlet in distances labelled A and B from the edge 31 of the outlet 24. The distance from the edge 31 to the initiation of the ice ring 32 depends for one thing of the amount of warm air raising from the outlet 24 system. However, typical values lay in the range 1-2 cm. To be able to effectively measure the formed water layer 33, the transducer assembly 29 should preferably be mounted in position A, i.e. centred underneath the formed ice ring, while the other transducer assembly 30 is mounted in a distance that is at least the sum of the distance A and the spatial extension of the ice ring 32 C (typically 0.5 - 5 cm). To measure snow 34 or other form of weight changes within the measurement area of the weight system, the weight system 35 is in this embodiment mounted between two roofings 27, and/or underneath the roofing 27. Information about the air temperature is in this embodiment obtained by employing a separate temperature sensor 36 positioned in such a way that the sensor 36 is protected against stratification or vandalism. Such a location can for instance be underneath a cornice 37 of the roof.

The practical application of the embodiment illustrated in figure 3 may be carried out as follows: If the transducer assembly 29 and/or 30 measures a water layer of 4 cm or more a signal is transmitted to a control system that gives a warning indication of possible blocked roof rainwater outlet. Alternatively, if the transducer assembly 29 detects ice with thickness of more than 3 cm, while the transducer assembly 30 measures a water layer of more than 1 cm, the heating installation 26 is activated and stays activated until the transducer assembly 30 records a water layer below the assembly's 30 set measurement range, alternatively after a set time period. As a safety measure against any erroneous activation caused by component failure, an additional criterion for activation may be a requirement that the air temperature stays below a certain temperature, for example +2°C. The above mentioned values / ranges are based on knowledge from existing installations for detection of stratification around outlets/drains.

## Claims

1. Installation for detection and measurement of environmentally induced stratifications such as water and/or ice around drains/outlets (1) on building roofs for drainage of liquids, comprising:
- at least one contact medium (5),
- at least one sensor,
- at least one control and measurement system (23),
wherein the at least one sensor comprises one or more piezoelectric transducers (2), which are mounted primarily perpendicular to said contact medium (5) underneath possible stratifications (6, 7), where the one or more piezoelectric transducers (2) are concealed under a protective layer formed by said contact medium (5), thereby precluding direct access from the side facing the location of the stratification,
wherein the at least one control and measurement system (23) comprises a computer (12) and a transmitter/receiver (11), the computer (12) comprises a I/O-unit (13) and a processor (14), where detection, identification and determination of the thickness of the stratification layers (6,7) located above each individual transducer (2) are achieved by generation and transmission of acoustic waves, followed by measurement of transducers signals due to reflected acoustic waves in the interfaces and the surfaces of the layers (6, 7); and wherein the contact medium are selected with acoustic impedance close to the acoustic impedance of the layers to be measured and applying a sealing compound between the transducer and the at least one contact medium(5).

2. Installation according to one of the preceding claims, **characterized in that** each of the piezoelectric transducers (2) are encapsulated in a protection case (3) which is mounted on the underside of the contact medium (5).

3. Installation according to one of the preceding claims, **characterized in that** the thickness threshold values for the one or more of the formed layers (6,7) are set based on measured time delays of the reflected acoustic waves relative to a set standard, causing a warning if said threshold values exceed said standard.

4. Installation according to one of the preceding claims, **characterized in that** it further comprises at least one weight system (9) arranged in the vicinity of the piezoelectric transducer (2) in order to provide additional information on the formed stratification (s) (6,7) around the drainage outlet (1).

5. Installation according to one of the preceding claims, **characterized in that** it further comprises at least one weight system (9) arranged outside the area in which the piezoelectric transducers (2) are mounted, in order to detect the undesirable intrusion of foreign bodies (10) around the drainage outlet (1).

6. Installation according to claim 4 or 5, **characterized in that** at least one of the piezoelectric transducers (2) ami/or at least one of weight sensors (9) are arranged in areas where the stratifications are expected not to take place for generating one or more acoustic reference waves, wherein the measured reference signals are compared with signals from the measured stratifications (6,7) in order to simplify identification and determination of thickness, and possibly to give warning about exceptional stratification in said areas.

7. Installation according to one of claims 4 to 6, **characterized by** also including a facility for melting snow ami/or ice for protecting the underlying structure against large pressure loads due to environmentally induced stratification (6,7,8), comprising a heating means (26) and a controller for switching the heating device on or off, wherein the device switching on and off depend on signals received from at least one piezoelectric transducer (2) and at least one weight sensor (9,35).

8. Method for detection and measurement of environmentally induced stratifications such as water and/or ice around drains/outlets (1) for draining liquid, on building roofs for drainage of liquids, comprising the steps:
• selecting material for contact medium with the same acoustic impedance as the layers to be measured,
• mounting one or more piezoelectric transducers (2) concealed beneath a protective layer formed by said contact mediim (5), thereby precluding direct access from the side facing the location of the stratification,,
• applying a sealing compound between the transducer and the at least one contact medium(5)
• initiating, by means of at least one control and measurement system (23), emission of acoustic waves toward the one or more interfaces of possible stratification
• measuring and analyzing reflected acoustic waves from said interfaces,
• calculating thickness of stratifications on the basis of the transmitted and received transducer signals with a receiver/transmitter (11) comprising at least one control and measurement system (23) comprising a computer (12) having an l/O unit (13) and a processor (14).

## Patentansprüche

1. Installation zum Erkennen und Messen von umweltbedingten Schichten, wie Wasser und / oder Eis, um Abflüsse / Auslässe (1), zum Ablassen von Flüssigkeiten, auf Gebäudedächern, umfassend:
- mindestens ein Kontaktmittel (5),
- mindestens einen Sensor,
- mindestens ein Steuerungs- und Messsystem (23),
wobei der mindestens eine Sensor einen oder mehrere piezoelektrische Wandler (2) aufweist, die vorwiegend senkrecht zu dem Kontaktmittel (5) unter möglichen Schichten (6, 7) angebracht sind, wobei der eine oder die mehreren piezoelektrischen Wandler (2) unter einer Schutzschicht verborgen sind welche durch das Kontaktmittel (5) gebildet wird, und dadurch einen direkten Zugang von der, der Schicht aus, zugewandten Seite verhindern,
wobei das mindestens eine Steuerungs- und Messsystem (23) einen Computer (12) und einen Sender / Empfänger (11) umfasst, der Computer (12) eine I/O-Einheit (13) und einen Prozessor (14) umfasst, wobei Erkennen, Identifizieren und Bestimmen der Dicke der über jedem einzelnen Wandler (2) befindlichen Schichten (6, 7) durch Erzeugen und Übertragen von Schallwellen, gefolgt von Messen von Wandlersignalen aufgrund von reflektierten Schallwellen in den Grenzflächen und den Oberflächen der Schichten (6, 7) und Kombinieren der Messergebnisse von dem einen oder den mehreren Wandlern erfolgt; und
wobei das Kontaktmittel mit einer akustischen Impedanz nahe der akustischen Impedanz der zu messenden Schichten ausgewählt wird und eine Abdichtung zwischen dem Wandler und dem mindestens einen Kontaktmittel (5) aufgebracht wird.

2. Installation nach einem der vorhergehenden Ansprüche, **dadurch gekennzeichnet, dass** jeder der piezoelektrischen Wandler (2) in einem Schutzgehäuse (3) eingekapselt ist, das an der Unterseite des Kontaktmittels (5) angebracht ist.

3. Installation nach einem der vorhergehenden Ansprüche, **dadurch gekennzeichnet, dass** die Dickengrenzwerte für die eine oder mehrere der gebildeten Schichten (6, 7) anhand gemessener Zeitverzögerungen der reflektierten Schallwellen gegenüber einem festgelegten Standard eingestellt werden, eine Erwärmung verursachend wenn die Grenzwerte den Standard überschreiten.

4. Installation nach einem der vorhergehenden Ansprüche, **dadurch gekennzeichnet, dass** sie weiter mindestens ein Gewichtssystem (9) aufweist, das in der Nähe des piezoelektrischen Wandlers (2) angeordnet ist, um zusätzliche Informationen über die gebildete(n) Schicht(en) (6, 7) um den Ablass (1) bereitzustellen.

5. Installation nach einem der vorhergehenden Ansprüche, **dadurch gekennzeichnet, dass** sie weiter mindestens ein Gewichtssystem (9) aufweist, das außerhalb des Bereichs angeordnet ist in dem die piezoelektrischen Wandler (2) angebracht sind, um das unerwünschte Eindringen von Fremdkörpern um den Ablass (1) zu erfassen (10).

6. Installation nach Anspruch 4 oder 5, **dadurch gekennzeichnet, dass** mindestens einer der piezoelektrischen Wandler (2) und / oder mindestens einer der Gewichtssensoren (9) in Bereichen angeordnet sind, in denen zu erwarten ist, dass die Schichten nicht zur Erzeugung einer oder mehrerer akustischer Referenzwellen beitragen, wobei die gemessenen Referenzsignale mit Signalen aus den gemessenen Schichten (6, 7) verglichen werden, um Identifizieren und Bestimmen der Dicke zu vereinfachen und möglicherweise vor einer außergewöhnlichen Schichtbildung in diesen Bereichen zu warnen.

7. Installation nach einem der Ansprüche 4 bis 6, **dadurch gekennzeichnet, dass** zusätzlich eine Einrichtung zum Schmelzen von Schnee und / oder Eis, zum Schutz des Untergrundes gegen große Druckbelastungen durch umweltbedingte Schichten (6, 7, 8) vorgesehen ist, beinhaltend ein Heizmittel (26) und eine Steuerung zum Ein- oder Ausschalten der Heizeinrichtung, wobei das Einund Ausschalten der Einrichtung von Signalen abhängt, die von mindestens einem piezoelektrischen Wandler (2) und mindestens einem Gewichtssensor (9, 35) empfangen werden.

8. Verfahren zum Erkennen und Messen von umweltbedingten Schichten, wie Wasser und / oder Eis, um Abflüsse / Auslässe (1) zum Ablassen von Flüssigkeit, auf Gebäudedächern zum Ablassen von Flüssigkeiten, umfassend die Schritte:
• Auswählen von Material für Kontaktmittel mit der gleichen akustischen Impedanz wie die zu messenden Schichten,
• Anbringen eines oder mehrerer piezoelektrischer Wandler (2), die unter einer durch das Kontaktmittel (5) gebildeten Schutzschicht verborgen sind, und dadurch einen direkten Zugang von der, der Schicht aus, zugewandten Seite verhindern,
• Aufbringen einer Abdichtung zwischen dem Wandler und dem mindestens einen Kontaktmittel (5)
• Auslösen, durch mindestens ein Steuerungs- und Messsystem (23), Aussenden von Schallwellen zu der einen oder den mehreren Grenzflächen möglicher Schichten
• Messen und Analysieren reflektierter Schallwellen von diesen Grenzflächen,
• Berechnen von Schichtdicken anhand der gesendeten und empfangenen Wandlersignale mit einem Empfänger / Sender (11), mindestens enthaltend ein Steuer- und Messsystem (23) mit einem Computer (12) mit einer I/O-Einheit (13) und einen Prozessor (14).

## Revendications

1. Installation pour la détection et la mesure des stratifications induites par l'environnement telles que l'eau et/ou la glace autour des drains/sorties (1) sur les toits des bâtiments pour le drainage des liquides, comprenant :
- au moins un milieu de contact (5),
- au moins un capteur,
- au moins un système de commande et de mesure (23),
dans lequel le au moins un capteur comprend un ou plusieurs transducteurs piézoélectriques (2), qui sont montés principalement perpendiculairement audit milieu de contact (5) en-dessous stratifications possibles (6, 7), où un ou plusieurs transducteurs piézoélectriques (2) sont dissimulé sous une couche protectrice formée par ledit milieu de contact (5), empêchant ainsi un accès direct du côté faisant face à l'emplacement de la stratification,
dans lequel le au moins un système de commande et de mesure (23) comprend un ordinateur (12) et un émetteur/récepteur (11), l'ordinateur (12) comprend une unité d'E/S (13) et un processeur (14), où la détection, l'identification et la détermination de l'épaisseur des couches de stratification (6,7) situées au-dessus de chaque transducteur individuel (2) sont obtenues par la génération et la transmission d'ondes acoustiques, suivies par la mesure des signaux des transducteurs dus aux ondes acoustiques réfléchies dans les interfaces et les surfaces des couches (6,7) et la combination des résultats de mesure d'un ou plusieurs transducteurs; et
dans lequel le milieu de contact est sélectionné avec impédance acoustique proche de l'impédance acoustique des couches à mesurer et en appliquant un composé d'étanchéité entre le transducteur et le au moins un milieu de contact (5).

2. Installation selon l'une des revendications précédentes, **caractérisée en ce que** chacun des transducteurs piézoélectriques (2) sont encapsulé dans un boîtier de protection (3) qui est montés sur la face inférieure du milieu de contact (5).

3. Installation selon l'une des revendications précédentes, **caractérisée en ce que** les valeurs de seuil d'épaisseur pour un ou plusieurs couches formées (6,7) sont réglées sur la base des délais mesurés des ondes acoustiques réfléchies par rapport à une norme établie, de donner un alerte si lesdites valeurs de seuil dépassent ladite norme.

4. Installation selon l'une des revendications précédentes, **caractérisée en ce qu'**elle comprend en outre au moins un système de poids (9) arrangé au voisinage du transducteur piézoélectrique (2) afin de fournir des informations complémentaires sur la ou les stratifications formées (6,7) autour de la sortie de drainage (1).

5. Installation selon l'une des revendications précédentes, **caractérisée en ce qu'**elle comprend en outre au moins un système de poids (9) arrangé à l'extérieur de la zone dans laquelle les transducteurs piézoélectriques (2) sont montés, afin de détecter l'intrusion indésirable de corps étrangers (10) autour de la sortie de drainage (1).

6. Installation selon revendication 4 ou 5, **caractérisée en ce qu'**au moins un des transducteurs piézoélectriques (2) et/ou au moins un des capteurs de poids (9) sont disposés dans des zones où les stratifications ne sont pas censées avoir lieu pour générer un ou plusieurs ondes de référence acoustiques, dans lesquelles les signaux de référence mesurés sont comparés aux signaux des stratifications mesurées (6,7) afin de simplifier l'identification et la détermination de l'épaisseur, et éventuellement de donner l'alerte de une stratification exceptionnelle dans lesdites zones.

7. Installation selon l'une des revendications 4 à 6, **caractérisée en ce qu'**elle comporté également une facilité de fonte de neige et/ou de glace pour protéger la structure sous-jacente contre les fortes charges de pression en raison de la stratification induite par l'environnement (6,7,8), comprenant un moyen de chauffage (26) et un contrôleur pour la mise en marche et l'arrêt le dispositif de chauffage, dans lequel la mise en marche et l'arrêt du dispositif dépendent des signaux reçus d'au moins un transducteur piézoélectrique (2) et au moins un capteur de poids (9,35).

8. Méthode de détection et de mesure des stratifications induites par l'environnement telles que l'eau et/ou la glace autour des drains/sorties (1) pour drainer le liquide, sur les toits des bâtiments pour le drainage des liquides, comprenant les étapes :
• Sélectionner un matériau pour milieu de contact avec la même impédance acoustique que les couches à mesurer,
• monter un ou plusieurs transducteurs piézoélectriques (2) dissimulé sous une couche protectrice la glace formé par ledit milieu de contact (5), empêchant ainsi l'accès direct du côté faisant face à l'emplacement de la stratification,
• appliquer un composé d'étanchéité entre le transducteur et le au moins un milieu de contact (5)
• initier, au moyen d'au moins un système de commande et de mesure (23), l'émission d'ondes acoustiques vers la ou les plusieurs interfaces de stratification possible
• mesurer et analyser les ondes acoustiques réfléchies desdites interfaces,
• calculer l'épaisseur des stratifications sur la base des signaux de transducteur transmis et reçus avec un récepteur/émetteur (11) comprenant au moins un système de commande et de mesure (23) comprenant un ordinateur (12) ayant une unité d'E/S (13) et un processeur (14).
